# EUROPEAN PATENT SPECIFICATION

(11) **EP 1 089 939 B1**
(45) Date of publication and mention of the grant of the patent: **04.03.2009**
(21) Application number: 99912472.0
(22) Date of filing: 12.03.1999
(51) Int. Cl.: C01F 11/18, C01B 17/44, B01D 53/48, B01D 53/79

(54) **METHOD OF PROCESSING SULFUR-CONTAINING MATERIALS DERIVED FROM FLUE GAS DESULFURIZATION OR OTHER SOURCES**
VERFAHREN ZUM VERARBEITEN VON SCHWEFELHALTIGEN ABFÄLLEN AUS DER RAUCHGASENTSCHWEFELUNG ODER AUS ANDEREN QUELLEN
PROCEDE DE TRAITEMENT DE MATIERES CONTENANT DU SOUFRE ISSUES DE LA DESULFURATION DES GAZ DE COMBUSTION OU PROVENANT D'AUTRES SOURCES

(30) Priority: 01.04.1998 US 80297 P
(43) Date of publication of application: 11.04.2001
(73) Proprietor: Chalmers, Franklin S., Washington, DC 20009-1304 (US)
(72) Inventor: Chalmers, Franklin S., Washington, DC 20009-1304 (US)
(74) Representative: von Füner, Nicolai
(86) International application number: PCT/US1999/005453
(87) International publication number: WO 1999/050180

(56) References cited:
- GB-A- 2 163 739
- US-A- 3 574 530
- US-A- 4 078 048
- US-A- 4 370 161

## Description

### BACKGROUND OF THE INVENTION

### FIELD OF THE INVENTION

The present invention relates to the field of processing sulfur-containing materials such as poorly soluble metal sulfides derived from flue gas desulfurization or other sources.

### DESCRIPTION OF THE BACKGROUND ART

In recent years governmental and other bodies have become increasingly active in resisting air pollution. Concentration of SO₂ in the atmosphere is one form of air pollution that has been particularly objectionable. In the past, industrial facilities such as electrical power plants and other steam generating facilities, sulfuric acid plants, metal smelters and petroleum refineries merely vented their flue gases containing sulfurous emissions to the atmosphere. The growth and concentration of industrial facilities emitting sulfur oxides gradually increased the ground level SO₂ concentrations and airborne particulate sulfates derived from SO₂ to levels considered to constitute harmful pollution.

Initially, the problem of reducing ground level SO₂ concentrations was solved by high stacks which would more widely distribute the SO₂ to maintain the SO₂ concentration at ground level to less than the threshold polluting level. Further expansion of industry and an awareness of the mechanisms by which SO₂ is converted to harmful sulfate particulate dispersions in the atmosphere have caused tightening of governmental-imposed SO₂ pollution limits which has forced both industry and government to seek processes for reducing or eliminating SO₂ pollution.

A number of processes have been commercially installed for the purpose of reducing SO₂ emissions either by flue gas desulfurization (FGD) or by removing the sulfur from the fuel prior to combustion such as by gasification. These processes have been successful to varying degrees.

Sulfur dioxide is recovered in common commercial practice from waste gases, such as flue gas from the burning of coal or other sulfur bearing fuels, using absorptive processes such as wet scrubbing with lime or limestone slurries, lime or limestone dry injection, or lime or limestone slurry injection spray drying which is preferable for the purposes of this invention. Each of these processes produce a waste product comprised of calcium sulfate, calcium sulfite and calcium carbonate contaminated with impurities such as gangue, heavy metal salts, fly ash and unburned carbon introduced with the lime or limestone as well as from the fuel. Wet scrubbing has the advantages of higher utilization of the lime or limestone and lower residual sulfur dioxide content in the effluent waste gas but produces the waste product as an aqueous slurry which must be either disposed in a pond or dried before processing. Dry scrubbing by injection into the firebox or lime/limestone slurry injection spray drying have the advantages of higher stack gas temperature for better plume dispersal and less water in the plume hence less plume visibility and of producing the waste product as a dry powder usually in a bag-house installed to also remove particulate material such as fly ash. Dry injection scrubbing has a lower efficiency of lime/limestone utilization and a higher concentration of sulfur dioxide in the effluent stack gas. Lime or limestone slurry injection spray drying combines the advantage of greater sulfur dioxide removal, as in the wet scrubber, with the advantages of less water vapor in the stack gas, less plume visibility, better dispersion due to higher stack gas temperature and a dry product.

Processes for the cleanup of stack gases or fuel gasification can be classified either as "throwaway" or "recovery" types depending on the manner of disposition of the absorbed SO₂. The "throwaway" processes are characterized by the conversion of SO₂ to, for example, calcium sulfite or calcium sulfate, or a mixture thereof combined with fly ash and residual calcium carbonate or lime, or by the conversion of sulfur in solid fuel as it is gasified or liquified to hydrogen sulfide gas which is then absorbed by calcium oxide to form calcium sulfide mixed with impurities from the original fuel, which is discarded such as in a landfill. Material containing calcium sulfate or calcium sulfite might in some instances be processed to manufacture useful gypsum products but it is more often discarded such as in a landfill from which it can be leached into ground water. Thus the "throwaway" processes help to improve air quality but generally require the use of valuable land for waste disposal, make no profit because they do not make useful products and may cause secondary water pollution because water soluble components in the waste may be leached by rain water and pollute ground waters due to the contained sulfite which has a high chemical oxygen demand. Metal sulfides contained in landfills also can be oxidized by air to form sulfuric acid run off in surface water. The "recovery" processes are regenerable in that they absorb the SO₂ from the waste gas and then produce either elemental sulfur or industrially useful sulfur compounds such as sulfuric acid or liquefied sulfur dioxide while returning the absorbent material to its original condition for recycle and the absorption of additional SO₂. Such regenerable "recovery" processes in the past generally have been more expensive to build and more expensive to operate than the simpler calcium carbonate, oxide or hydroxide based "throwaway" processes even after taking credit for the value of the products manufactured.

U.S. Patent No. 4,083,944 to the present inventor, Franklin S. Chalmers is directed toward one prior art regenerative process for flue gas desulfurization.

U.S. Patent No. 5,607,577 to Koszarycz et al. is directed to equipment and process involving addition of calcium oxide to Athabaska tar sand native to Alberta, Canada, to prevent the emission of sulfur dioxide when the residual coke on the spent sand is combusted, thus primarily avoiding the need for and expense of separate flue gas desulfurization equipment. There is some redistribution of the end products to which the various forms of sulfur report. Those include solid compounds of calcium and sulfur, liquid hydrocarbon-sulfur compounds and hydrogen sulfide gas. The solid compounds of calcium and sulfur from this process, which is an alternative to flue gas desulfurization (FGD) processes are similar in composition to products of various flue gas desulfurization (FGD) processes. This process assumes those products are thrown away.

U.S. Patent No. 5,433,939 (the '939 patent) to Thomas D. Wheelock appears to be a continuation of development of the Iowa State University (ISU) process by Dr. T.D. Wheelock (U.S. Patent 4,102,989) which is intended primarily to convert calcium sulfate and calcium sulfite to calcium oxide with the evolution of sulfur dioxide. That earlier process under certain conditions has an undesired preferential production of calcium sulfide. It appears that Dr. Wheelock has addressed that earlier deficiency of his process. The process described in the '939 patent starts with calcium sulfide fed to a fluid bed gas-solid high-temperature oxidation-reduction reactor either having two zones or a single zone operated in two cyclic alternating modes wherein calcium sulfide is alternately oxidized to calcium sulfate and reduced stepwise to calcium oxide, ultimately oxidizing all the calcium sulfide feed material to calcium oxide and sulfur dioxide. There are high operational costs and control problems inherent in the delicate balance of alternating oxidation and reduction in the ISU process, and problems and costs involved with manufacturing, storing and transporting sulfur dioxide or sulfuric acid as products. Column 1, lines 14-33 in this patent describe a need in the art for dealing with waste calcium sulfide.

U.S. Patent No. 5,653,955 to Thomas D. Wheelock is an improvement patent on the earlier cited Wheelock '939 patent. This patent extends the earlier described gas-solid high-temperature oxidation-reduction process from fluid bed reactors to also include fixed and moving bed reactors and goes into somewhat more detail as to the mechanisms of the earlier patented process.

U.S. Patent No. 5,037,450 to Keener et al. relates to apparatus and process to remove sulfur and nitrogen compounds from coal with the sulfur reporting to a sorbent material specified (column 5, lines 25-33) to be preferably calcium oxide or calcium carbonate. The spent sorbent is collected in the form of calcium sulfide for regeneration in an unspecified manner (column 4, lines 10-13). The patent states (column 5, line 68 to column 6, line 1) that the spent sorbent, CaS, can be subsequently regenerated to CaO in a separate operation, not shown, and further states (column 6, lines 52-54) that since the spent sorbent (CaS) can be regenerated to CaO, the apparatus will reduce the output of solid waste.

U.S. Patent NO. 4,824,656 to Rice et al. speaks (column 1, lines 9-11) of dissolving a sulfur-containing catalyst in liquid ammonia solution and separating the ammonia therefrom in order to recover the elemental sulfur. But in column 2, lines 48-52 it is clear that the catalyst such as activated carbon saturated with elemental sulfur is to be extracted with anhydrous ammonia liquid to dissolve the sulfur leaving behind the insoluble carbon catalyst. Second, the prior art description (column 1, lines 25-52) talks of high temperature methods, with U.S. patent citations, for recovering sulfur dioxide with the concurrent production of lime and states (column 1, lines 42-45), "All of the above methods require very high temperature and none of them disclose the recovery of catalyst used in removal of the sulfur." Third, the process cited to produce the sulfur laden solid catalyst to which this patent is related is described (column 2, lines 32-40) as having already thermally reduced the gypsum to calcium sulfide, "The calcium sulfide is converted into ammonium sulfide and/or ammonium bisulfide, which in turn is oxidized to sulfur using a suitable catalyst." An aqueous slurry of CaS apparently is reacted with ammonia, NH₄OH, precipitating calcium hydroxide and an aqueous solution of ammonium sulfide and/or ammonium bisulfide is then (column 5, lines 22-26) contacted with activated carbon catalyst and air in a column to produce the sulfur laden carbon catalyst.

US 3,574,530 discloses a cyclic, regenerative process for the removal of sulfur dioxide from waste gases containing the same which comprises:
injecting at least one member of the group consisting of an alkaline earth metal carbonate and an alkaline earth metal oxide into an initial reaction zone and in contact with a gas comprising sulfur dioxide and oxygen and having solid impurities suspended therein, said gas being at a temperature between about 1000° F. and about 2500° F., to produce as the reaction product solids comprising alkaline earth metal sulfate in association with said solid impurities,
withdrawing said solids from said initial reaction zone and introducing said solids to a reduction zone, in said reduction zone contacting said solids with a reductant under conditions including a temperature between about 1200° F. and about 2000° F. such that alkaline earth metal sulfate is reduced to alkaline earth metal sulfide,
withdrawing from said reduction zone solids comprising alkaline earth metal sulfide in association with impurities derived from said gas comprising sulfur dioxide, combining said solid withdrawn from said reduction zone with water to form an aqueous slurry thereof, contacting the resultant slurry in a solubilization reaction zone with hydrogen sulfide to solubilize alkaline earth metal sulfide as alkaline earth metal hydrosulfide, the resulting aqueous solution of alkaline earth metal hydrosulfide having water insoluble impurities suspended therein,
passing said aqueous solution having said impurities suspended therein to a liquid-solids separation zone, in said separation zone separating said water insoluble impurities from said aqueous solution,
passing the clarified aqueous solution of alkaline earth metal hydrosulfide to a carbonation reaction zone, in said carbonation reaction zone contacting said solution with carbon dioxide thereby precipitating alkaline earth metal carbonate and producing hydrogen sulfide,
withdrawing gaseous effluent comprising hydrogen sulfide from said carbonation reaction zone and passing a portion thereof to said solubilization reaction zone as the hydrogen sulfide feed thereto, and
recovering alkaline earth metal carbonate substantially free of said impurities from said carbonation zone and passing at least one member of the group consisting of said recovered alkaline earth metal carbonate and alkaline earth metal oxide derived from said recovered carbonate, to said initial reaction zone for reutilization therein.

### Calcium, Strontium and Barium

Calcium, strontium and barium, elements collectively known as the alkaline earths, are closely related in the chemical periodic table and have chemical properties generally similar to one another, but some specific chemical properties which are substantially different.

### Prior Barium Sulfide Technology

Technology has been known since the early to mid 19th century and commercially practiced for much of that time in the United States to produce barium compounds by the roasting with coal of barite ore, a form of barium sulfate, to produce black ash from which barium sulfide is leached with water. A barium sulfide solution of technical grade purity is the starting point for the production of many other barium chemicals. For example barium carbonate is made by the addition of soda ash or of carbon dioxide typically as contained in flue gas; barium chloride by the addition of calcium chloride or hydrochloric acid; barium sulfate or blanc fixe by the addition of salt cake; barium nitrate by the addition of Chilean salt petre, etc. The key to the preparation of technical grade solution is the water leaching of barium sulfide black ash in order to separate a commercially pure solution of barium sulfide from insoluble gangue and other impurities. Barium sulfide is very soluble in water and a recovery or yield of 95% more or less is commonly attained.

In the conventional commercial processing of a barium sulfide solution to produce the carbonate salt, carbon dioxide is introduced into a batch of aqueous sulfide liquor, often in the form of flue gas from the combustion of fuel such as coal or oil, in order to precipitate commercially pure barium carbonate and ultimately to release hydrogen sulfide gas. Those practiced in the art are aware that during the initial carbonation period carbon dioxide is absorbed with no evolution of hydrogen sulfide because the barium sulfide solution hydrolyzes to form barium hydrosulfide and barium hydroxide from which the hydroxide selectively reacts with bicarbonate ions to precipitate barium carbonate.

BaS + 2H₂O → Ba (SH) (OH) + H₂O ↔ Ba(HS)₂ + Ba(OH)₂ CO₂ + 2H₂O → H⁺ + HCO₃⁻

Ba(HS)₂ + Ba(OH)₂ + H⁺ + HCO₃⁻ → Ba(HS)₂ + BaCO₃ + 2H₂O

Barium hydrosulfide precipitates as barium carbonate with the continuing addition of carbon dioxide only after all the barium hydroxide has been consumed.

2HCO₃⁻ + Ba (HS)₂ → BaCO₃ + 2H₂S

Thus the mid-point of the reaction is signaled by the sudden appearance in the reactor gaseous effluent of hydrogen sulfide at a concentration twice that of the incoming carbon dioxide. The end-point of the reaction is signaled by a break-through of carbon dioxide and the cessation of evolution of hydrogen sulfide gas as the residual dissolved hydrogen sulfide is stripped from the remaining aqueous mother liquor by the flue gas. The precipitate is settled, filtered, washed with water on the filter device, dried, bagged and sold. The evolved hydrogen sulfide gas, diluted with the remains of the flue gas, might be absorbed in an aqueous solution of caustic soda in order to manufacture sodium sulfide or might be sent as feed stock to any one of several types of commercially proven plants for conversion by partial oxidation with air or other means to produce elemental sulfur.

### Industrial History of Calcium Sulfide

Calcium sulfide has long been recognized as being insoluble in water. A process for the manufacture of soda ash from salt and sulfuric acid was first established at St. Denis, France, by Leblanc in 1792. In the Leblanc process, as it was known, common salt was reacted with sulfuric acid to make sodium sulfate (solid) and hydrochloric acid (gas).

The sodium sulfate was then reacted at high temperature with limestone (calcium carbonate) and coal to produce a "black ash" comprised of sodium carbonate, calcium sulfide, residual carbon and coal ash. The sodium carbonate was then leached with water from the insoluble calcium sulfide, carbon and coal ash and subsequently separated by evaporation in a commercially pure form. The Leblanc process was replaced as the leading source of soda ash worldwide by the ammonia-soda or Solvay process only after 1885. The Encyclopedia of Chemical Technology, 3rd edition, Kirk & Othmer, (22: 118), mentions that calcium hydrosulfide, Ca(SH)₂, from Leblanc process waste was used to manufacture sodium thiosulfate.

Ca (SH) ₂ + 2O₂ → CaS₂O₃ + H₂O

CaS₂O₃ + Na₂SO₄ → Na₂S₂O₃ + CaSO₄

Many attempts have been made to devise processes to recover sulfur or sulfuric acid from natural gypsum or from the process waste created by phosphoric acid manufacture or lime/limestone flue gas desulfurization (FGD) scrubbing. The Müller-Kühne process to convert gypsum to sulfuric acid and cement was commercialized by Bayer in Germany in 1916-1918. The heart of that development is a process which produces a gas stream of sulfur dioxide suitable for manufacture of sulfuric acid and a clinker suitable for the manufacture of Portland cement. The Müller-Kühne process is offered commercially today. A two stage fluidized bed reactor system to reduce gypsum to sulfur dioxide and clinker is disclosed in U.S. Patent No. 4,102,989 to Wheelock, and assigned to Iowa State University. It sometimes is referred to as the ISU process. A major drawback of the Müller-Kühne and ISU processes is that if the FGD waste product contains more than a stoichiometric quantity of unburned carbon from fly ash, the reaction cannot be controlled to produce clinker and sulfur dioxide as desired but instead produces calcium sulfide admixed with the other materials as the only product. Separating excess carbon contained in the fly ash in order to make the process operate as desired would require a very expensive duplication of bag-house equipment in the FGD facility or the expensive import of carbon free calcium sulfate/sulfite material for blending with FGD waste material feed stock.

The thermal reduction of gypsum both experimentally by the United States Bureau of Mines (USBM) and commercially by Elcor Co. is discussed in the Encyclopedia of Chemical Technology, 3rd edition, Kirk & Othmer, (22: 91,92). The Bureau of Mines performed extensive research work in the late 1960's on two processes *(*Sulfur 80 1969) for the production of elemental sulfur from gypsum, CaSO₄, via reduction roasting with coal or reducing gas at 900-950°C to make calcium sulfide. The first USBM process was to slurry the calcium sulfide in water, to carbonate the slurry with flue gas containing carbon dioxide in order to precipitate calcium carbonate mixed with the gangue and ash and evolve hydrogen sulfide which could then be reduced to elemental sulfur in a Claus process plant. The second USBM process involved the reaction of sodium chloride (presumably with carbon dioxide, water and calcium sulfide) in a counter-current ionexchange system to make sodium carbonate, calcium chloride and elemental sulfur. Three tons of each by-product were made for every ton of sulfur in this process. Neither process has ever been commercialized but some of the technology from the first USBM process was employed in a plant built in west Texas by Elcor Co. (Chem. Engineering News, 21, March 20, 1967) and briefly operated commercially in 1968. Elcor used a shaft kiln and reformed natural gas to reduce gypsum to calcium sulfide which was then quenched in water, ground in a ball mill, mixed with more water and contacted with carbon dioxide from the shaft kiln to evolve hydrogen sulfide and precipitate calcium carbonate mixed intimately with sulfide ash impurities. The hydrogen sulfide was reduced to elemental sulfur in a Claus plant. There was no market for the impure calcium carbonate and although most technical problems were said to have been solved, the unprofitable plant was shut down due to prohibitive production costs such as operation of the ball mill.

There remains a need in the art for improved methods of flue gas desulfurization, and processing sulfur-containing materials such as poorly soluble metal sulfides.

### SUMMARY OF THE INVENTION

In accordance with the present invention, a method is provided for processing sulfur-containing material derived from a source selected from the group consisting of sulfur-containing, carbon-containing fuel and gaseous combustion product of sulfur-containing, carbon-containing fuel. The method comprises providing a calcium sulfide-containing mixture derived from said source by reacting sulfur-containing material in said source with a calcium-containing material so as to produce said calcium sulfide-containing mixture further containing impurities. The method further comprises leaching a majority of said calcium sulfide from said calcium sulfide-containing mixture in a first aqueous solution containing hydrogen sulfide in an amount sufficient to dissolve said majority of said calcium sulfide in said first aqueous solution, so as to form a second solution containing calcium hydrosulfide, wherein said first and second solutions are maintained under a substantially oxygen-free atmosphere comprising hydrogen sulfide gas. The second solution containing said calcium hydrosulfide is separated from said insoluble impurities, and a calcium-containing material selected from the group consisting of calcium carbonate and calcium hydroxide is precipitated from the second solution.

The invention further includes an apparatus comprising a leaching zone containing a calcium sulfide-containing mixture derived from a source selected from the group consisting of sulfur-containing, carbon-containing fuel and gaseous combustion product of sulfur-containing, carbon-containing fuel, within which leaching zone a majority of the calcium sulfide from said calcium sulfide-containing mixture is leached in a first aqueous solution containing hydrogen sulfide in an amount sufficient to dissolve said majority of said calcium sulfide in said first aqueous solution, so as to form a second solution containing calcium hydrosulfide, wherein said leaching zone includes means for providing a blanket of hydrogen sulfide gas so that said hydrogen sulfide blanket maintains said first and second solutions under a substantially oxygen-free atmosphere. The apparatus includes a separation system connected to the leaching zone, through which the second solution containing said calcium hydrosulfide is separated from said insoluble impurities. The apparatus further includes a precipitating zone operatively associated with the separating system, within which a calcium-containing material is precipitated from the second solution, said calcium-containing material being selected from the group consisting of calcium carbonate and calcium hydroxide.

The invention also is directed to a method of processing a metal sulfur compound-containing material, comprising heating a first metal sulfur compound-containing mixture in the presence of a reducing agent, said metal being selected from the group consisting of calcium and strontium, the sulfur compound being selected from the group consisting of sulfates and sulfites, so as to convert the first metal sulfur compound-containing mixture into a second mixture including impurities and a corresponding metal sulfide of said metal. A majority of said metal sulfide is leached from said second mixture in a first aqueous solution containing hydrogen sulfide in an amount sufficient to dissolve said majority of said metal sulfide in said first aqueous solution, so as to form a second aqueous solution containing a corresponding metal hydrosulfide of said metal. The second solution containing said metal hydrosulfide is separated from said impurities, and a metal-containing material selected from the group consisting of a metal carbonate of said metal and a metal hydroxide of said metal is precipitated from said second solution.

### DETAILED DESCRIPTION OF THE PREFERRED EMBODIMENTS

The present invention permits utilization of technologies and chemistry to selectively absorb sulfur dioxide from other gases by lime/limestone scrubbing (flue gas desulfurization), to economically transport the intermediate product preferably in a dry form in order to minimize transportation and drying costs or as a slurry if desired, to roast the dry material with coal or other reducing agents in order to convert it to a mixture of crude calcium sulfide and impurities, to leach the calcium sulfide in an aqueous solution in order to separate the calcium sulfide from gangue and other impurities, to precipitate calcium in a commercially pure form either as the carbonate by the addition of carbonate ions or as the hydroxide by removing hydrogen sulfide by physical means, and to reduce the hydrogen sulfide removed from the mother liquor to elemental sulfur by partial oxidation. All prior attempts to utilize such an overall process sequence to make elemental sulfur and high purity calcium carbonate from lime/limestone scrubbing effluents have been determined either to be impossible due to the very low solubility of calcium sulfide in water or have proven to be uneconomical due to an inability to separate calcium sulfide from impurities in the system prior to precipitation so as to profitably manufacture marketable calcium carbonate. There has been no prior recognition at all that calcium hydroxide can be made easily from calcium sulfide by hydrolysis and the withdrawal of hydrogen sulfide. The present invention avoids the delicate control and stoichiometry problems involved with prior art combined reduction/oxidation processes, can produce elemental sulfur rather than sulfur dioxide or sulfuric acid which are both much more difficult and expensive to store or transport to market than sulfur, and can separate calcium compounds as more valuable products from other clinker residue components.

### Strontium sulfide and Hydrogen Sulfide

Strontium sulfide black ash is made commercially from strontium sulfate ore. The strontium black ash is leached with water to obtain a strontium sulfide solution which is sometimes converted to strontium carbonate by the addition of carbon dioxide in a manner similar to the manufacture of barium carbonate. The yield of barium using the process is about 95%, more or less, but the yield of strontium from its ore by reductive roasting, water leaching and carbonation has been observed to be only perhaps 50% to 75% more or less. Heretofore, there has been a lack of satisfactory explanation for the lower yield.

As noted above, calcium sulfide is essentially insoluble in water. It has been commercially demonstrated to be impracticable and generally considered impossible, prior to this invention, to utilize any variation of the commercial barium process technology and chemistry for the purification of calcium sulfide in order to economically manufacture other commercially pure calcium salts.

This invention permits one to integrate into an otherwise unattainable regenerative flue gas scrubbing process, or into a process to economically recover sulfur from gypsum, a means to increase the solubility of calcium sulfide in water from essentially insoluble (0.0121 gm CaS/100 ml solution at 15°C, 0.0212 gm CaS/100 ml solution at 20°C, or 0.4614 gm CaS/100 ml solution at 100°C) to very soluble (19 to over 21 gm CaS/100 ml solution at 20°C) by the addition of varying amounts of hydrogen sulfide, a chemical readily available in the process which is fully recovered and recycled.

Norbert A. Lange, Handbook of Chemistry, (1946) Sixth Edition, p. 182-3, teaches that calcium sulfide decomposes in both cold and hot water. Research by A. Mourlot (1897), Compt. Rend., 127, p. 408, demonstrated that when crystalline calcium sulfide was heated with air-free water, it rapidly dissociated into calcium hydrosulfide and calcium hydroxide and evolved hydrogen sulfide. The decomposition demonstrates that the hydrosulfide ion calcium bond, unlike the hydrosulfide barium bond in the barium sulfide hydrolysis product, is easily broken in aqueous solution releasing hydrogen sulfide and precipitating insoluble calcium hydroxide. But William F. Linke, Solubilities, Inorganic and Metal-Organic Compounds, (1958), Fourth Edition, Vol. I., p. 657-8, American Chemical Society, Washington, DC, refers to work of E.H. Riesenfeld and H. Feld, (1921), Z. Anorg. Allgem. Chem,, 116, p. 213-227, on the solubility of calcium sulfide in air free water and in solutions containing hydrogen sulfide (see Table 2 herein) concluding, "From the result at 20° and 760-mm pressure [H₂S] it was calculated that 206.5 gms. of CaS are present per liter. The corresponding figure for CaS in H₂O alone at 20° and 760-mm pressure of air is 0.212 gms per liter. Hence H₂S increases the solubility of CaS in water almost 1000 times." The present invention utilizes this to increase the solubility of calcium sulfide in water by three orders of magnitude (almost 1000 fold) by introducing an excess of hydrogen sulfide in one embodiment, to provide a unique integrated process previously considered impossible for the economic recovery of commercially pure calcium and sulfur values from crude impure calcium sulfide. The calcium can be easily precipitated from the clarified aqueous solution of calcium sulfide as calcium carbonate by the addition of carbonate ions, usually in the form of carbon dioxide. The present invention also utilizes the same reversible chemistry to reclaim if desired a commercially pure grade of calcium hydroxide from the decanted and/or filtered calcium hydrosulfide solution by simply removing hydrogen sulfide from the solution by boiling the solution, vacuum, steam stripping, inert gas stripping, or other appropriate means or a combination thereof. H. von Miller and C. Opl, (1884), *German Pat., D.R.P.,* 28067, state that if a solution of calcium hydrosulfide is evaporated, hydrogen sulfide is expelled and calcium hydroxide is crystallized due to hydrolysis.

Ca (HS)₂ + 2H₂O ↔ Ca (OH)₂ + 2H₂S

Hydrogen sulfide dissolves in the water in proportion to its partial pressure above the water and drives the reversible reaction away from the insoluble calcium hydroxide toward the very soluble calcium hydrosulfide according to the following equations. A withdrawal of hydrogen sulfide from the system reverses the equations to precipitate calcium hydroxide. E.H. Riesenfeld and H. Feld, (1921), *op. cit.,* report that a decrease in partial pressure of air-free hydrogen sulfide in contact with a solution of calcium hydrosulfide can result in the crystallization of purified calcium sulfide rather than calcium hydroxide.

H₂S + H₂O ↔ H⁺ + HS⁻ + H₂O

2CaS + 4H₂O ↔ Ca(HS)₂ + Ca (OH)₂ + 2H₂O ↔ 2Ca (OH)₂↓ + 2H₂S↑

The process invention, which permits these achievements, also is applicable to improving the currently practiced process to manufacture strontium sulfide from strontium sulfate ore by high temperature reduction, followed by water leaching and carbonation, in order to make strontium carbonate. This invention greatly improves the economics of strontium carbonate production by very significantly increasing the recovery or yield of strontium and permits the alternative production of strontium hydroxide if desired.

The similarities and unique differences of calcium, strontium and barium and their compounds are described, including many references to basic research, by J.W. Melor in A Comprehensive Treatise on Inorganic and Theoretical Chemistry, volume III, pages 619-908, (1923), Longmans, Green and Co., London. Barium sulfate, strontium sulfate and calcium sulfate, and mixtures thereof, each have been commercially roasted with coal and other reducing agents to produce "black ash" wherein their respective sulfates have been converted to sulfides. It should be noted that calcium hydroxide, Ca(OH)₂, is only slightly soluble in water, decreasing from 0.185% by wt. at 0°C to 0.077% by wt. at 100°C while barium hydroxide is very soluble in water, increasing from 1.64% by wt. at 0°C to over 50% by wt. at 80°C according to Lange's Handbook of Chemistry, Sixth Edition, 1946, p. 1224-1225. By comparison, strontium hydroxide, Sr(OH)₂, is moderately soluble in water as shown in Table 5 herein, increasing from 0.03% wt. at 0°C to 15.90% wt. at 100°C. The hydrosulfides of calcium, barium and strontium are very soluble as shown respectively in Tables 2, 4 and 6 herein.

Melor describes the sulfides in particular in Section 13. Calcium, Strontium, and Barium Sulphides, pages 740-758. He states that A. Mourlot (1897), Compt. Rend., 127, p.408, demonstrated that when crystalline calcium sulfide was heated with air-free water, it rapidly dissociated into calcium hydrosulfide and calcium hydroxide and evolved hydrogen sulfide. E. Terres and K. Bruckner, (1920), Zeit. Elektrochem., 26, 25, found that strontium sulfide heated with air free water reacted in a manner similar to calcium sulfide evolving hydrogen sulfide. Terres and Bruckner reported strontium hydroxide crystals are deposited on cooling a solution of strontium sulfide dissolved in boiling water but they found that when barium sulfide is extracted with water at all temperatures up to boiling, only barium hydroxyhydrosulfide, Ba(SH)(OH)•5H₂O, was formed. This they found to be stable and under no conditions were they able to separate barium hydroxide by crystallization from the barium sulfide solution.

These differences in the chemistry of barium, strontium and calcium, known for up to a century or more but heretofore not recognized for their profound significance, are fundamental to the present invention for the separation of calcium and sulfur values from impurities associated with sulfur compounds of calcium and for an improved recovery yield of strontium compounds from sulfate ore as well as essentially complete recovery of the sulfur from sulfur compounds of strontium.

The present invention now explains why the barium process is not well suited for use in recovering strontium and identifies the changes needed to obtain higher yields of strontium at lower overall costs.

When strontium sulfide dissolves in water it hydrolyzes and dissociates into equal molecular portions of slightly soluble (3.5% by weight in water) strontium hydroxide and very soluble (33.2% by weight in water) strontium hydrosulfide. As the concentration of strontium sulfide in solution increases the solubility product constant of strontium hydroxide is exceeded and it crystallizes out of solution as the octohydrate. (see Table 6 herein)

2SrS + 10H₂O ↔ Sr(HS)₂ + Sr(OH)₂ + 8H₂O ↔ Sr(HS)₂ + Sr(OH)₂ • H₂O↓

E. Terres and K. Bruckner, (1920), Zeit. Elektrochem., 26, 25, found that strontium sulfide heated with air free water reacted in a manner similar to calcium sulfide evolving hydrogen sulfide. C.L. Berthollet, (1802), Journ. Polyt., 4, 315, reported strontium hydroxide octohydrate crystals were formed when a boiling solution of strontium sulfide was cooled. H. Rose, (1842), Pogg Ann., 55, 415, 533, reported the cooled mother liquor contained strontium hydrosulfide and found that if strontium sulfide is treated with a small proportion of water, strontium hydrosulfide passes into solution first, then if the residue is again treated with water, strontium hydroxide is mainly dissolved. The latter confirms the law of mass action with the more soluble strontium hydrosulfide preferentially dissolved while the former demonstrates that the strontium to hydrosulfide ion bond is broken in aqueous solution less readily than the calcium to hydrosulfide bond but the solution still can release hydrogen sulfide with some of the strontium hydrosulfide converted to the much less soluble hydroxide. The hydrosulfide to barium bond, unlike its bond to both calcium and strontium, is tenacious. Barium sulfide dissolved in water yields only barium hydroxyhydrosulfide pentahydrate crystals, Ba(SH)(OH)•5H₂O, upon cooling with no barium hydroxide crystals formed unless an excess of hydroxide is added.

Terres and Bruckner (1929) prepared solubility tables for the system Sr(OH)₂-Sr(SH)₂-H₂O which are reproduced in W.F. Linke, op cit., p.1515 (reproduced as Table 6 herein). These tables demonstrate that the solubility of strontium hydroxide in water at all temperatures decreases with increasing concentrations of strontium hydrosulfide as predicted by the law of mass action. For example, at 60°C, the solubility of strontium hydroxide in water alone is about 3.25% to 3.6% by weight, the solubility of strontium hydrosulfide in water alone is about 33.2% by weight, but the solubility of strontium hydroxide decreases to 1.75% by weight in the presence of 25% by weight of strontium hydrosulfide and further decreases to zero in a solution saturated with strontium hydrosulfide. It is obvious with these facts in mind that the water leaching of a strontium sulfide black ash with water alone will result principally in a solution of strontium hydrosulfide while a considerable quantity of strontium hydroxide will report to the insoluble black ash residue thus resulting in a yield of as little as about half of the strontium contained in the black ash.

The present invention greatly increases the recovery or yield of strontium by avoiding the loss as insoluble hydroxide in the leaching operation through the addition of hydrogen sulfide to the leaching solution. The present invention also utilizes the reversible chemistry to reclaim if desired a portion of the strontium contained in the decanted and/or filtered strontium hydrosulfide solution as a commercially pure grade of strontium hydroxide by simply removing hydrogen sulfide from the solution by heating and cooling, vacuum, steam stripping, inert gas stripping, or other appropriate means or a combination thereof. Care must be taken to avoid the oxidation of strontium sulfide at higher temperatures to strontium sulfate by water vapor as reported by O. Schumann, (1877), Liebig's Ann., 187, p. 286.

Hydrogen sulfide dissolves in water in proportion to its partial pressure above the water according to Henry's law and drives the reversible reaction to convert slightly soluble strontium hydroxide, Sr(OH)₂, to very water soluble strontium hydrosulfide, Sr(HS)₂, according to the following equations. A withdrawal of hydrogen sulfide from the system can reverse the equations to precipitate strontium hydroxide.

H₂S + H₂O ↔ H⁺ + HS⁻ + H₂O

2SrS + 4H₂O → Sr (HS)₂ + Sr (OH)₂ = + 2H₂ ↔ 2Sr (OH)₂↓ + 2H₂S↑

It is possible to decant both calcium and strontium hydrosulfide aqueous solutions from insoluble impurities in a manner similar to the commercial decanting of barium hydroxyhydrosulfide liquor from its similar impurities. The required concentration of dissolved hydrogen sulfide and hence hydrosulfide ions is less than that which is in equilibrium with one atmosphere partial pressure of hydrogen sulfide in contact with the water as illustrated in Tables 2 and 6 herein. Impurities usually include gangue from the ore, ash and unburned carbon from the coal or other reducing agent and metal sulfides such as iron. All of these impurities are insoluble in both water and water containing hydrosulfide ions. The decanted solution can be filtered if desired to remove any remaining entrained solids.

### Tables of Solubilities

### Calcium Sulfide cas

Compiled verbatim from: Linke, William F., Solubilities, Inorganic and Metal Organic Compounds, A-Ir, A Compilation of Solubility Data from the Periodical Literature, volume I, Fourth Edition, A Revision and Continuation of the Compilation Originated by Atherton Seidell, 1958, American Chemical Society, Washington, D.C., p. 657-658.

**Table 1**

| Solubility of Calcium Sulfide in Water in the Absence of Air (Foerster and Kubel, 1924) | | | | |
|---|---|---|---|---|
| The sample was prepared by heating calcium sulfite for 1 hour at 700-750°C. It contained 12.1% CaS. | | | | |

| t°C | Minutes Digested with H₂O | Gms. Sample digested per 100 gms. H₂O | Gms. CaS dissolved per 100 cc sat. soln. | Per cent of the used CaS dissolved |
|---|---|---|---|---|
| 15 | 15 | 2.5414 | 0.0090 | 2.9 |
| 15 | 15 | 2.3759 | 0.0100 | 3.5 |
| 15 | 60 | 2.4707 | 0.0121 | 4.0 |
| 100 | 15 | 3.2079 | 0.1450 | 37.4 |
| 100 | 60 | 5.3080 | 0.4614 | 71.8 |

**Table 2**

| Solubility of Calcium Sulfide in Water and in Aqueous Solutions of Hydrogen Sulfide at 20°C (Riesenfeld and Feld, 1921) | | | | | | | |
|---|---|---|---|---|---|---|---|
| The sample of calcium sulfide contained CaSO₄, CaO, and C. Water saturated with the sample at 20° contained 0.2120 gms. CaS, 0.3881 gms. CaSO₄ and 0.1786 gms. CaO per liter. For the solubility in the presence of H₂S an apparatus constructed entirely of glass was used. The air was completely displaced with H₂S to insure that only this gas was present. The equilibrium was approached from below and from above by changing the pressure of the H₂S. The influence of time upon the attainment of equilibrium was found to be considerable, but the rate was shown to be a reaction of the first order and from it the final equilibrium could be estimated. The manometer was read in the beginning and after the solution had been shaken and from this it was known whether equilibrium was being approached from above or below. The results of the analyses in grams of S per 100 cc. Were plotted and from the curves and the calculations from Henry's law on the proportion of the S in the form of H₂S, the difference gave that present as calcium sulfhydrate and calcium sulfide. | | | | | | | |

| Pressure of H₂S in mm. Hg | Gms. Ca(HS)₂ per 100 cc. Sat. soln. at | | | Pressure of H₂S in mm. Hg | Gms. Ca(HS)₂ per 100 cc. Sat. soln. at | | |
|---|---|---|---|---|---|---|---|
| | 0° | 20° | 40° | | 0° | 20° | 40° |
| 100 | 26.61 | 24.87 | 21.97 | 500 | 31.17 | 28.76 | 26.61 |
| 150 | 28.76 | 25.78 | 23.47 | 550 | 31.42 | 29.09 | 27.02 |
| 200 | 29.45 | 26.19 | 24.24 | 600 | 31.66 | 29.43 | 27.35 |
| 250 | 29.92 | 26.86 | 24.79 | 650 | 31.83 | 29.65 | 27.69 |
| 300 | 30.09 | 27.45 | 25.20 | 700 | 32.08 | 30.09 | 28.04 |
| 350 | 30.43 | 27.69 | 25.50 | 750 | 32.33 | 30.34 | 28.35 |
| 400 | 30.67 | 28.10 | 25.94 | 760 | 32.41 | 30.42 | 28.44 |
| 450 | 30.92 | 28.31 | 26.25 | | | | |

From the result at 20° and 760 mm. pressure it was calculated that 206.5 gms. of CaS are present per liter. The corresponding figure for CaS alone at 20° and 760 mm. pressure of air is 0.212 gm per liter. Hence H₂S increases the solubility of CaS in water almost 1000 times.

### Barium Sulfide BaS

Compiled verbatim from: Linke, William F., Solubilities, Inorganic and Metal Organic Compounds, A-Ir, A Compilation of Solubility Data from the Periodical Literature, volume I, Fourth Edition, A Revision and Continuation of the Compilation Originated by Atherton Seidell, 1958, American Chemical Society, Washington, D.C., p.386-387.

**Table 3**

| Solubility of Commercial Barium Sulfide in Water (Terres and Bruckner, 1920) | | | |
|---|---|---|---|
| The sample of barium sulfide contained 87.2% BaS, 4.33% Ba(OH)₂ and 8.47% Fe and Mn oxides. Due to the oxidizing action of air upon the sulfhydrate the solubility determinations were conducted in an atmosphere of hydrogen. The mixtures were constantly agitated for many hours. | | | |

| | Gms. per 100 gms. sat. soln. | | |
|---|---|---|---|
| t° | Ba(OH)₂ | Ba(SH)₂ | Corresponding BaS in solution |
| 0 | 2.05 | 2.42 | 4.03 |
| 20 | 3.28 | 3.90 | 6.48 |
| 40 | 5.32 | 6.32 | 10.5 |
| 60 | 8.14 | 9.68 | 16.5 |
| 80 | 10.62 | 12.61 | 21.0 |
| 100 | 12.80 | 15.25 | 25.25 |

**Table 4**

| Solubility of Barium Hydrogen Sulfide in Water (Terres and Bruckner, 1920) | |
|---|---|
| t° | Gms. Ba(SH)₂ per 100 gms. sat. soln. |
| -15 | 32.0 |
| 0 | 32.6 |
| 20 | 32.8 |
| 40 | 34.5 |
| 60 | 36.2 |
| 80 | 39.0 |
| 100 | 43.7 |

### Strontium Sulfide SrS

Compiled verbatim from: Linke, William F., Solubilities, Inorganic and Metal Organic Compounds, K-Z, A Compilation of Solubility Data from the Periodical Literature, Volume II, Fourth Edition, A Revision and Continuation of the Compilation Originated by Atherton Seidell, 1965, American Chemical Society, Washington, D.C., p.1514-1515.

**Table 5**

| Solubility of Strontium Hydroxide in Water (Scheibler, 1883) | | |
|---|---|---|
| t° | Grams per 100 grams solution | |
| | SrO | Sr (OH) ₂•8H₂O |
| 0 | 0.35 | 0.90 |
| 10 | 0.48 | 1.23 |
| 20 | 0.68 | 1.74 |
| 30 | 1.00 | 2.57 |
| 40 | 1.48 | 3.80 |
| 50 | 2.13 | 5.46 |
| 60 | 3.03 | 7.77 |
| 70 | 4.35 | 11.16 |
| 80 | 6.56 | 16.83 |
| 90 | 12.0 | 30.78 |
| 100 | 18.6 | 47.71 |

Later determinations agreeing closely with Scheibler, 1883, were given by Grube and Hussbaum, 1928, and Ahrens, 1930.

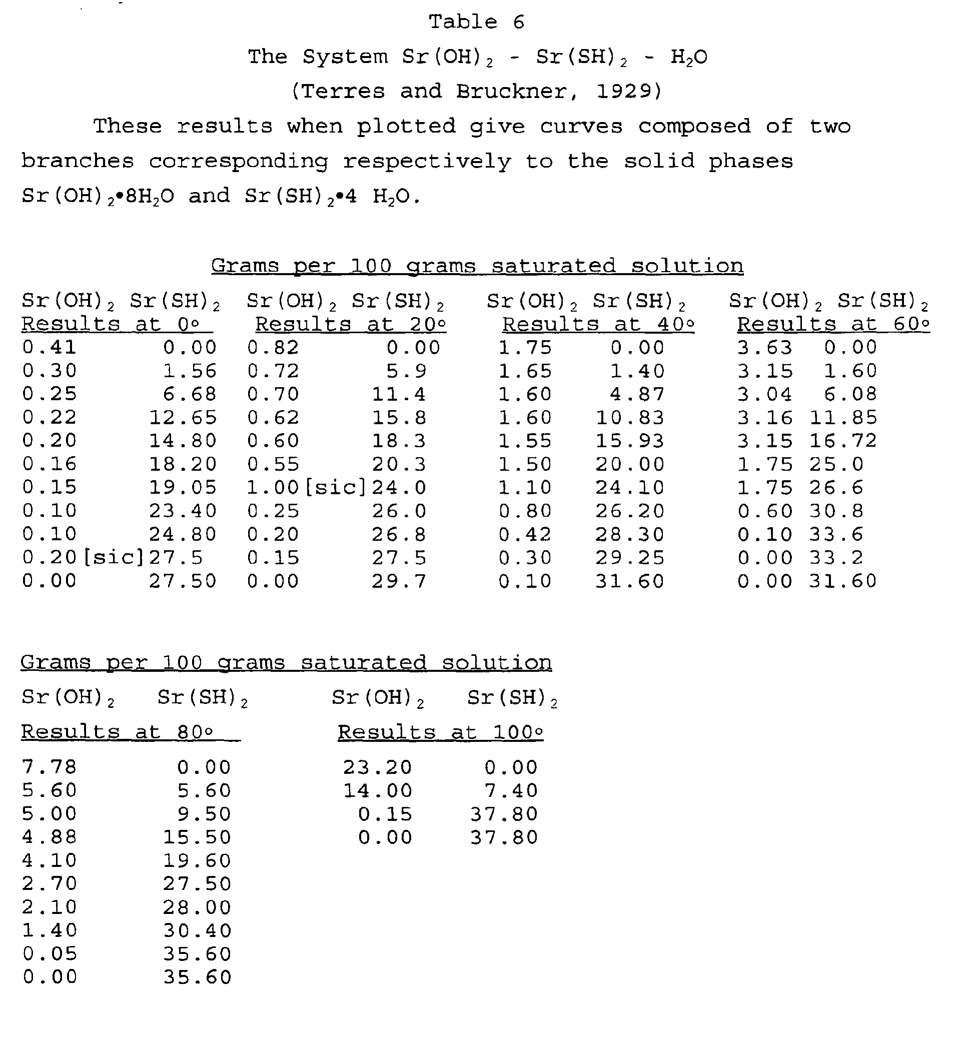

Certain simple but important differences in process chemistry must be understood when changing from the carbonation of a barium sulfide aqueous solution (in reality an equimolar solution of barium hydroxide and barium hydrosulfide) in contact with air to the carbonation of a calcium or strontium hydrosulfide aqueous solution maintained under an atmosphere of hydrogen sulfide preferably free of oxygen.

Barium carbonate is not soluble in carbonic acid, an aqueous solution of carbon dioxide, hence the end-point of the of the carbon dioxide absorption for barium carbonate precipitation is not critical and is routinely overshot. Calcium or strontium carbonates will dissolve to a limited extent in water containing an excess of carbon dioxide to form the slightly more soluble calcium or strontium bicarbonates. The recycling of calcium or strontium bicarbonates in mother liquor would result in a decreased production of the desired calcium or strontium carbonate product due to the loss of precipitated calcium or strontium as their carbonates reporting to the gangue and impurities waste stream if a mother liquor containing the respective bicarbonate were to be recycled without further treatment before being used to dissolve another batch of crude calcium or strontium sulfide.

CaCO₃ + H⁺ + HCO₃⁻ → Ca (HCO₃)₂

Ca (HCO₃)₂ + CaS → 2CaCO₃ + H₂S

SrCO₃ + H⁺ + HCO₃⁻ → Sr(HCO₃)₂

Sr (HCO₃)₂ + SrS → 2SrCO₃ + H₂S

Control of the addition of carbon dioxide to a rather precise endpoint in the conversion of calcium hydrosulfide to calcium carbonate is therefore necessary if one is to prevent these undesired process yield losses.

A small amount of calcium carbonate in the presence of water saturated with hydrogen sulfide gas will be hydrolyzed reversibly to form calcium hydrosulfide and calcium bicarbonate. It therefore is desirable to strip the remaining hydrogen sulfide gas from the mother liquor after carbonation in order to complete the precipitation of the calcium as the carbonate before recycling the mother liquor to dissolve another batch of calcium sulfide. This could be done after the primary decantation and washing of the main precipitated calcium carbonate product stream. It is probable but not yet proven that the same chemistry applies to strontium carbonate. The stripping gas should contain no excess carbon dioxide in order to avoid dissolving the residual solid calcium carbonate as the bicarbonate. It is preferable that the stripping gas contain no free oxygen which could oxidize some of the hydrogen sulfide to sulfur which then would co-precipitate with and contaminate the precipitated residual calcium carbonate.

The carbonation of barium sulfide aqueous solution is often accomplished with flue gas containing perhaps 10% to 12% more or less by volume of carbon dioxide and perhaps 3% more or less by volume of oxygen. It is well known to those skilled in the art that this small concentration of oxygen is sufficient to oxidize a portion of the sulfide compounds present to polysulfides or other sulfur compounds which report as trace amounts of sulfur contamination in the precipitated barium carbonate. E. H. Riesenfeld and H. Feld, Zeit. Anorg. Chem., 116, 213, 1921, prepared purified calcium monosulfide, CaS, by first dissolving the sulfide in an aqueous solution of hydrogen sulfide, then removing the hydrogen sulfide from the solution of calcium hydrosulfide by suction. They noted that if air be not excluded, the solution of hydrosulfide will be yellow owing to the formation of polysulfides, etc. They concluded that all operations therefore should be conducted in an atmosphere of hydrogen sulfide. E. Becquerel, Ann. Chim. Phys., (3), 22, 244, 1848, earlier emphasized his observation that if air be not excluded the sulfide would be partially oxidized to sulfate. This chemistry also applies to strontium sulfide solutions.

These observations of process chemistry lead to several factors which indicate that it is both economically and technically preferable to install a simple absorber-stripper unit to recover carbon dioxide from the source flue gas step for carbonation of calcium or strontium hydrosulfide rather than to use flue gas directly.

Carbonation of a calcium or strontium hydrosulfide solution with flue gas containing about 11% CO₂ and 3% O₂ would produce an off gas consisting of perhaps 20% more or less by volume hydrogen sulfide and 2.7% more or less oxygen. This off-gas would be recycled to dissolve the next sequential batch of black ash. A lowered partial pressure of hydrogen sulfide in equilibrium with the water solute used to dissolve calcium or strontium sulfide will appreciably reduce the solubility of calcium or strontium sulfide in the solution as shown in Tables 2 and 6 herein. This would require a larger volume of solution and larger equipment to maintain a given production rate than with a higher assay hydrogen sulfide gas.

The presence of even 2.7% oxygen in contact with the mother liquor during the solution of calcium or strontium sulfide from black ash would form soluble polysulfides. Those would decompose and precipitate sulfur or compounds thereof when the sulfide ions are depleted during carbonation and would contaminate the precipitated otherwise high quality calcium or strontium carbonate.

Carbonation with flue gas which contains oxygen will form polysulfides during the carbonation process which would contaminate the product calcium or strontium carbonate with sulfur when they decompose upon the depletion of sulfide ions.

An initial stream of 20% hydrogen sulfide which is subsequently and substantially depleted by partial absorption could present an environmental disposal problem. At the very least, if such a dilute stream of hydrogen sulfide were to be recycled to the primary equipment fire box it would increase the quantity of sulfur dioxide which would have to be scrubbed from the flue gas leaving that firebox. A stream of high purity hydrogen sulfide could be recycled to extinction within the black ash dissolving system with a simple blower thus requiring very little recycle to the primary firebox.

The recovery of elemental sulfur from hydrogen sulfide is most economically performed in a Claus process plant by partial oxidation using air. A smaller and less expensive Claus plant can be used at an appreciably lower operating cost to recover a given quantity of sulfur from a gas containing say 98% hydrogen sulfide than from a gas containing only 20% hydrogen sulfide.

A simple absorber-stripper unit can absorb carbon dioxide from the flue gas and deliver it at a concentration of 95% or preferably more carbon dioxide, zero oxygen and balance nitrogen to the calcium or strontium hydrosulfide carbonation process. A calcium or strontium hydrosulfide carbonation step fed with 95% carbon dioxide gas would produce about a 97.5% concentration of hydrogen sulfide. This high concentration of hydrogen sulfide would be very suitable to be contacted directly with recycled mother liquor in order to dissolve the next batch of calcium or strontium sulfide and it would serve as an appropriate and economical feed stock for the Claus sulfur recovery plant. A feed stock stream of high strength carbon dioxide could be mixed with a stream of hydrogen sulfide gas recycled through the carbonator if desired in order to control the reaction parameters and particle size distribution of the precipitated calcium or strontium carbonate.

### BRIEF DESCRIPTION OF THE DRAWINGS

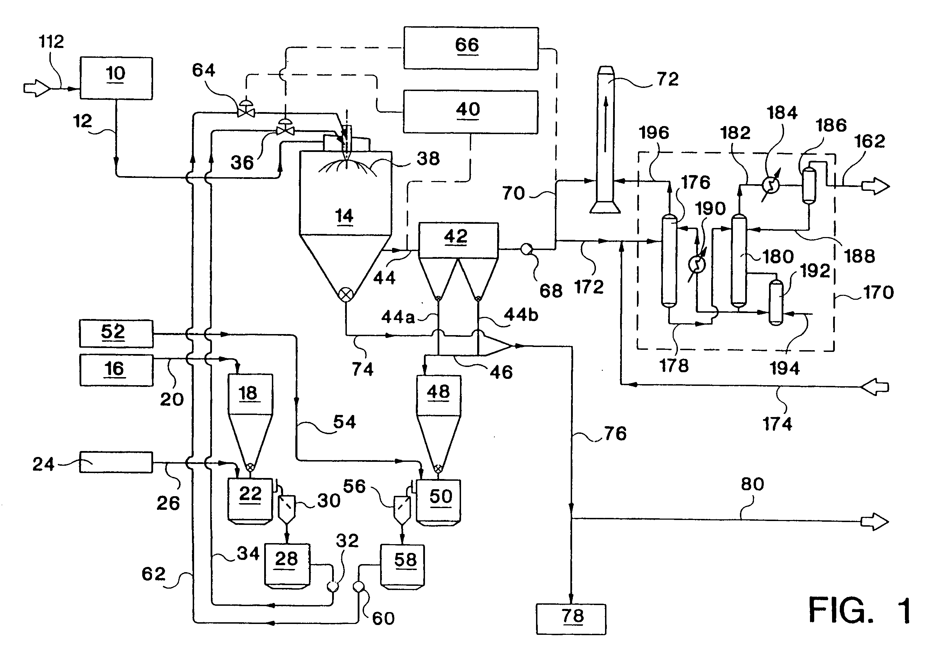

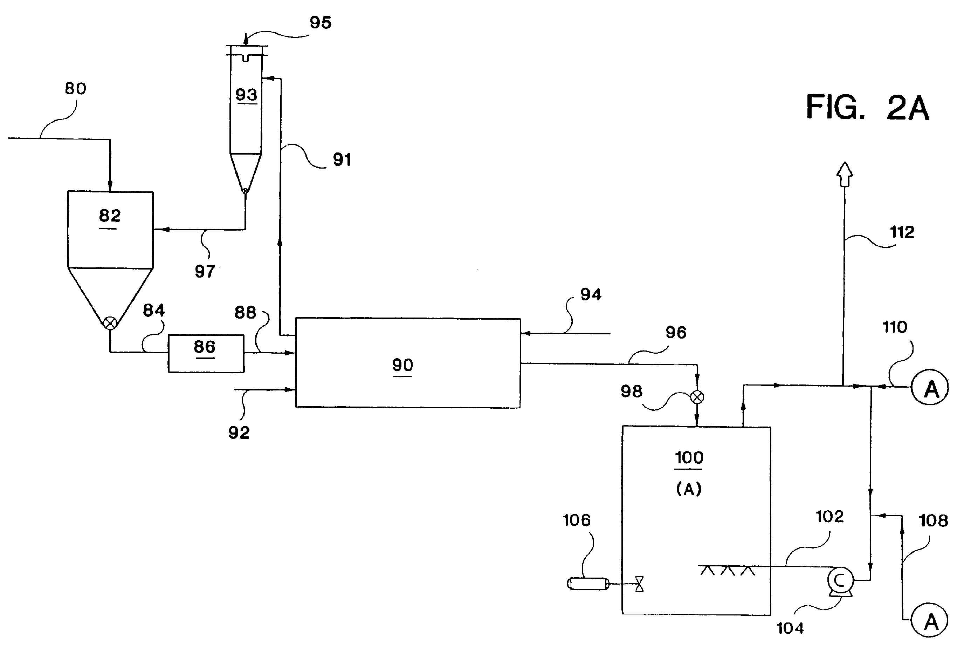

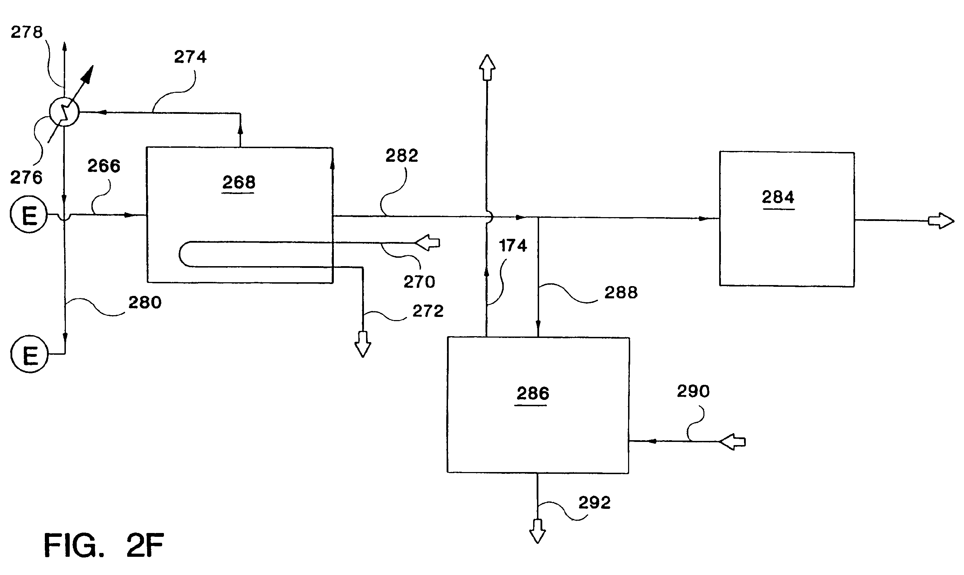

Figs. 1 and 2A-2F are schematic diagrams showing embodiments of an apparatus for carrying out the present invention.

One embodiment of the present invention can be carried out in an apparatus as shown in the accompanying figures.

Fig. 1 shows a boiler 10 from which sulfur dioxide-containing gaseous emissions pass through line 12 into spray absorber 14.

A raw lime supply 16 supplies a lime bin 18 through line 20. Lime is fed from lime bin 18 into lime slaker 22. Water from source 24 passes through line 26 into lime slaker 22, to be mixed with the lime to form lime milk. Lime milk flows from lime slaker 22 into lime milk tank 28 through conduit 30. Lime milk then passes through regulator 32 and line 34 and through control valve 36 to be injected into spray absorber 14 as droplet spray 38.

It is within spray absorber 14 (the absorption zone) that sulfur dioxide from the gaseous emission entering through line 12 is absorbed into the calcium-containing absorbent such as the droplet spray 38 of lime milk. Control valve 36 controlling the amount of lime milk injected into spray absorber 14 is controlled by SO₂ control 66 which controls lime milk dosing to meet local emissions requirements.

Excess lime dust from spray absorber 14 is collected in dust collector 42 through line 44, also under control of the flue gas outlet temperature control 40, as is known in the art.

Recycle dust from dust collector 42 is passed through lines 44a and 44b, to line 46, and then into recycle material bin 48. Recycle material passes from bin 48 into mix tank 50, where it is mixed with water from water source 52, entering mix tank 50 through line 54. Recycle lime mixed with water flows through conduit 56 into recycle feed tank 58. Recycle lime milk then can pass from recycle feed tank 58 through pump 60, line 62 and control valve 64 to be injected into the spray absorber as a portion of droplet spray 38. Control valve 64 is controlled by control 40 which controls recycle slurry dosing to control flue gas outlet temperature as is known in the art.

Cleaned emissions passing through dust collector 42 are propelled by fan 68 through line 70 into stack 72 to be emitted into the environment.

The first mixture resulting from the sulfur dioxide being absorbed in the lime within spray absorber 14 passes through line 74 and line 76 either to end product 78 for utilization or disposal, or in accordance with one embodiment of the present invention through line 80 to storage tank 82 shown in Fig. 2A.

The first mixture from the flue gas desulfurization process stored in storage bin 82 typically contains fly ash, calcium sulfite, calcium sulfate and calcium carbonate.

The first mixture from storage bin 82 is fed through line 84, feeder 86 and line 88 into calciner 90, which is a reduction kiln or reactor. A reducing agent such as coal also is fed into the calciner 90 through line 92, if needed, and air is added through line 94. The first mixture is heated in calciner 90, in the presence of carbon-containing material such as coal, so as to convert the first mixture into a second mixture including primarily calcium sulfide and impurities such as fly ash and the like. The second mixture typically is called black ash in the art, and exits calciner 90 through line 96 and feeder 98 into leach tank 100.

Dust exits calciner 90 through line 91 to a dust collector 93, which can be a cyclone or bag house type as is known in the art. Exhaust gas from dust collector 93 can be directed to the stack through line 95, and dust from collector 93 is directed into storage bin 82 through line 97.

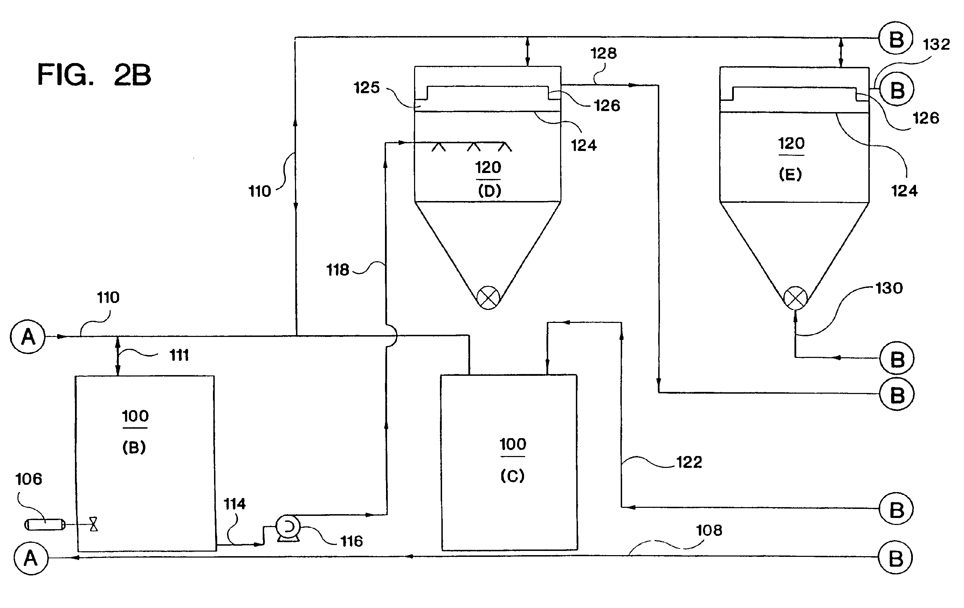

Various processing campaigns can be carried out in a single leach tank 100. While three separate leach tanks 100(A), 100(B), and 100(C), are shown in Figs. 2A and 2B, all actually represent a single leach tank in a battery of such leach tanks in which a dissolving campaign (A) is carried out, sequentially followed by a pump-out campaign (B), and a solution fill campaign (C), which again is followed by a dissolving campaign (A) and so forth sequentially.

Fig. 2A shows leach tank 100 in the dissolving campaign (A). The first aqueous solution present in tank 100 from fill campaign (C) is saturated with hydrogen sulfide pumped into leach tank 100(A) through line 102 by hydrogen sulfide recycle compressor 104. The hydrogen sulfide continuously added to the first aqueous solution is in an amount sufficient to dissolve the majority of the calcium sulfide continuously added through line 96 and feeder 98 into the first aqueous solution so as to form a second solution containing calcium hydrosulfide. Leaching is facilitated during the dissolving campaign (A) by agitator 106. Hydrogen sulfide can be derived from several sources, including hydrogen sulfide make-up feed line 108 and hydrogen sulfide blanket gas header line 110. Bleed off of inert gas which may build up in the recycled hydrogen sulfide gas is through line 112 to the boiler fire box as necessary.

Fig. 2B shows leach tank 100 in the pump-out campaign (B) and the solution fill campaign (C).

Following the dissolving campaign (A) in leach tank 100 shown in Fig. 2A, the pump-out campaign (B) takes place from leach tank 100 as shown in Fig. 2B. During the pump-out campaign (B), a slurry containing calcium hydrosulfide in solution and impurities is pumped from leach tank 100 through line 114 by slurry pump 116 and through line 118 into settling and decant vessel 120 during a fill and displacement campaign (D). During the pump-out campaign (B) the hydrogen sulfide blanket gas is maintained within leach tank 100 through line 111.

After all of the slurry is pumped from leach tank 100 into settling and decant vessel 120 during the pump-out campaign (B) leach tank 100 is filled with recycle liquor solution through line 122 in preparation for receiving black ash from calciner 90 in a later dissolving campaign, all the while under a blanket of hydrogen sulfide gas through line 110.

Referring back to the settling and decant vessel 120 during fill and displacement campaign (D) shown in Fig. 2B, the sludge settles to or below a level 124, whereas calcium hydrosulfide-containing clear solution 125 passes over weir 126 and exits vessel 120 through overflow weir take-off line 128. This is the hydrosulfide liquor to be processed downstream in accordance with the present invention.

However, prior to describing processing of the hydrosulfide liquor downstream in accordance with the present invention, the backwash campaign (E) and the residual sludge pump-out campaign (F) of the settling and decant vessel 120 will be discussed.

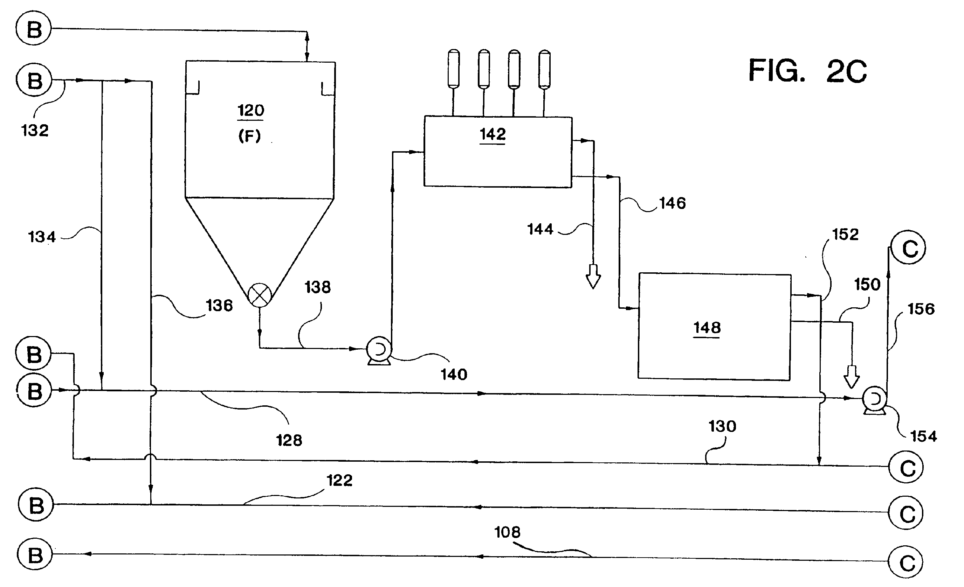

As with leach tank 100, settling and decant vessel 120 is shown in Figs. 2B and 2C as three separate vessels 120(D), 120(E) and 120(F), which in fact represent a single settling and decant vessel 120 in a battery of such settling and decant vessels, within which takes place three separate processing campaigns, namely, a fill and displacement campaign (D) shown in Fig. 2B, a backwash campaign (E) also shown in Fig. 2B, and a residual pump-out campaign (F) shown in Fig. 2C.

During the backwash campaign (E), wash water is forced through line 130 into settling and decant vessel 120. The wash water is forced through the sludge and over take-off weir 126 through overflow weir take-off line 132. Initially, full strength liquor is directed through line 134 to line 128, but after dilution of the liquor, it is diverted through line 136 to line 122 and fed to leach tank 100 for the solution fill campaign (C) shown in Fig. 2B, all the while under a blanket of hydrogen sulfide gas.

Fig. 2C shows the settling and decant vessel 120 during residue sludge pump-out campaign (F). During this campaign, all of the residue sludge is pumped out of settling and decant vessel 120 through line 138 and residue sludge pump 140 into an optional froth flotation concentrator 142. Froth containing metal sulfides concentrate can be removed through line 144 and sludge is directed through line 146 to a sludge dewatering filter or centrifuge 148. Dewatered sludge is directed through line 150 to waste disposal or is sintered for use as aggregate, while recycle water is directed through line 152 to line 130 to be used in the backwash campaign (E) in settling and decant vessel 120.

Hydrosulfide liquor containing calcium hydrosulfide solution exiting vessel 120 through overflow weir take-off line 128 is pumped by hydrosulfide liquor pump 154 through line 156 into carbonation reactor 160 during a carbonation reactor fill campaign (G).

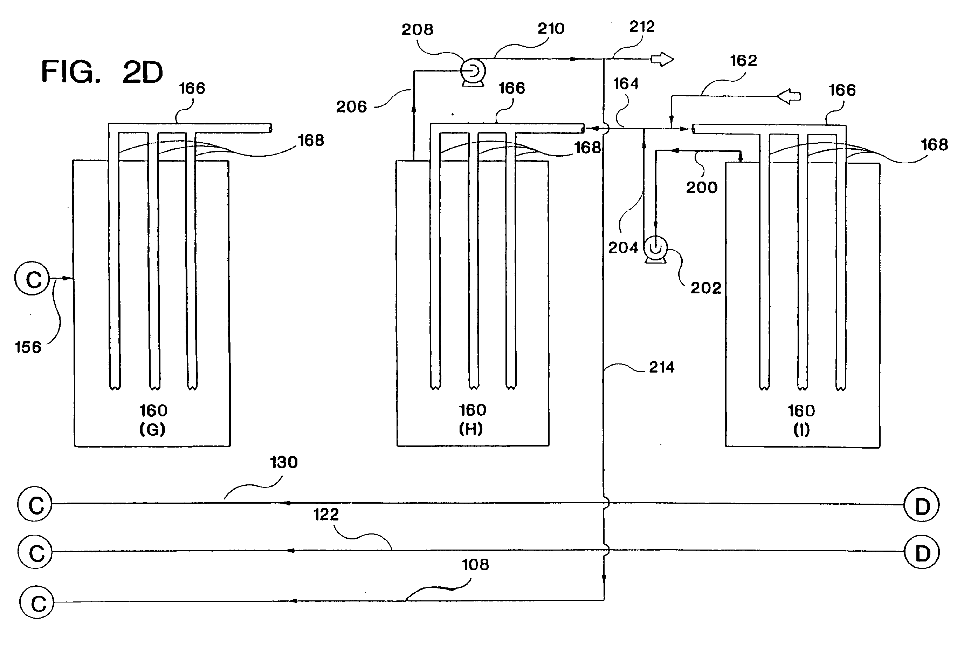

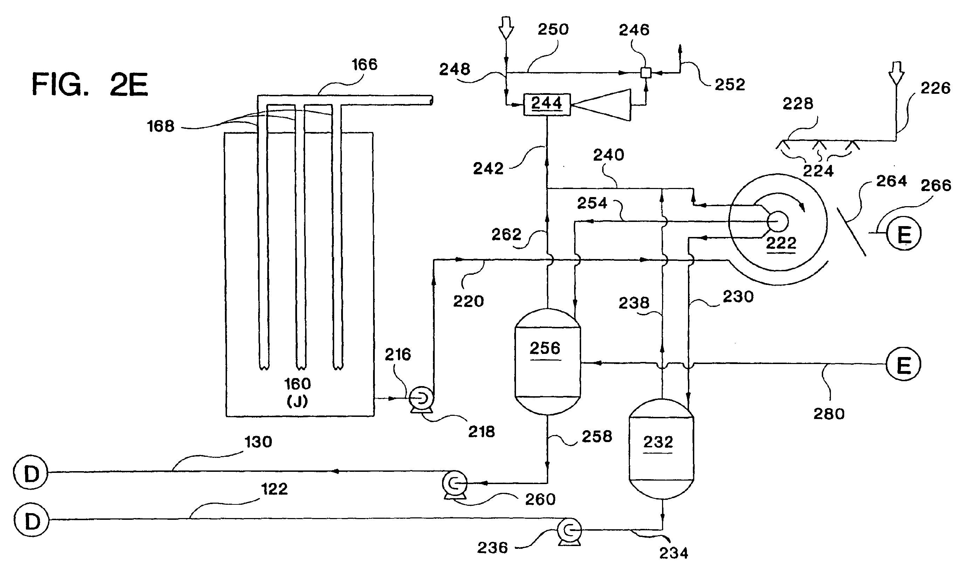

While Figs. 2D and 2E show four separate carbonation reactors 160, these actually represent a single carbonation reactor from a battery of such reactors during a series of campaigns which are sequentially carried out, including the fill campaign (G), the CO₂ scavenge campaign (H), a carbonation campaign (I), and a pump-out campaign (J).

Following filling of carbonation reactor 160 with hydrosulfide liquor during fill campaign (G), a carbonation campaign (I) is carried out.

During the carbonation campaign (I) in carbonation reactor 160, carbon dioxide is introduced through line 162 and recycled through lines 204 and 164, manifold 166 and CO₂ dispersers 168 into carbonation reactor 160 (I).

The carbon dioxide which is introduced through line 162 comes from a flue gas absorber/stripper unit 170 shown in Fig. 1. The flue gas absorber/stripper 170 receives flue gas through line 172, and can also receive carbon dioxide from an optional calcium carbonate calciner (discussed below) through line 174. Gas containing carbon dioxide enters a carbon dioxide absorber 176 through line 172. Absorbent liquid passing through carbon dioxide absorber 176 passes through line 178 to carbon dioxide stripper 180. Concentrated carbon dioxide gas leaves stripper 180 through line 182, passes through cooler 184 and liquid condensate separator 186, to line 162. Condensate recycles to carbon dioxide stripper 180 through line 188. Cooler 190 reduces the temperature of stripped absorbent liquid returned to absorber 176. Reboiler 192 heated with steam received through line 194 boils the bottoms absorbent liquid from the stripper to furnish absorbent vapor which strips out carbon dioxide from the liquid flowing downward through stripper 180. Gas, from which some carbon dioxide has been removed, passes through line 196 and out stack 172 to atmosphere.

During the carbonation campaign (I), recycle mixture of carbon dioxide and hydrogen sulfide gases is drawn from carbonation reactor 160 (I) through line 200 by carbonation recycle blower 202 and is introduced into line 164 through line 204.

A carbon dioxide scavenge campaign (H) takes place in carbonation reactor 160 (H) where residual carbon dioxide is removed from hydrogen sulfide gas which then passes through line 206 to hydrogen sulfide blower 208. Hydrogen sulfide gas passes through line 210, and any excess is directed as an intermediate hydrogen sulfide product through line 212 to a known Claus sulfur recovery unit (not shown). Hydrogen sulfide gas needed by the process system passes through line 214 to line 108 to be used in leach tank 100 (A) during the dissolving campaign (A). After serving in scavenge campaign (H) carbonation reactor 160 is advanced to service in the next carbonation campaign (I).

During the scavenge campaign (H) and carbonation campaign (I) within carbonation reactor 160, calcium carbonate is precipitated from the calcium hydrosulfide-containing solution by carbonation with substantially oxygen-free carbon dioxide gas. The precipitated calcium carbonate is removed from carbonation reactor 160 during a pump-out campaign (J), after substantially complete carbonation, through line 216, as a carbonate slurry by carbonate slurry pump 218.

The carbonate slurry is passed through line 220 to a sectionalized vacuum filter 222, which can be a rotary-type as shown, or any other type as known in the art.

As shown in Fig. 2E, washwater from line 226 exits manifold 228 to be sprayed through nozzles 224 onto the rotary-type sectionalized vacuum filter 222 for washing of the carbonate slurry.

Mother liquor-containing liquid passes from filter 222 through line 230 to a mother liquor filtrate receiver 232. Separated mother liquor passes through line 234 and mother liquor recycle pump 236 to line 122. Gases drawn from filter 222 pass from the mother liquor filtrate receiver 232 through lines 238, 240 and 242, through two stage vacuum eductors 244 and 246, by steam inputted respectively through lines 248 and 250. The atmosphere pressure exhaust from eductor 246 exits through line 252 to atmosphere, or to line 112 to the boiler fire box if desired.

Washwater containing some mother liquor exits filter 222 through line 254 and passes to washwater receiver 256. Recycle washwater passes from washwater receiver 256, through line 258, then through washwater recycle pump 260 to line 130. Gas from washwater 256 passes through line 262 to line 242 and into vacuum eductors 244 and 246.

Calcium carbonate filter cake is removed from filter 222 at doctor blade 264, and passes along chute 266 to calcium carbonate drier 268 which preferably is an indirect steam-heated type calcium carbonate drier as shown. In the indirect steam-heated type calcium carbonate drier 268 shown, steam enters drier 268 through line 270, and steam condensate exits drier 268 through line 272, providing heat to dry the calcium carbonate. Vapors exit line 274, pass through cooling unit 276 which separates noncondensed gas exhaust passed through line 278, and condensate which passes through line 280 and is returned to the washwater receiver 256.

Dried calcium carbonate passes out of calcium carbonate drier 268 by line 282 and can be sent directly to product bagging 284, or optionally sent to a calciner 286 through conveyor 288. Fuel enters calciner 286 through line 290, and the calcium carbonate is heated and converted to raw lime and carbon dioxide. Raw lime exits calciner 286 through line 292, and if desired, can be sent to raw lime supply 16 shown in Fig. 1. Carbon dioxide exits calciner 286 through line 174 and can be sent to the carbon dioxide absorber/stripper unit 170 shown in Fig. 1.

Since many modifications, variations and changes in detail may be made to the described embodiments, it is intended that all matter in the foregoing description and shown in the accompanying drawings be interpreted as illustrative and not in a limiting sense.

## Claims

1. A method for processing sulfur-containing material derived from a source selected from the group consisting of sulfur-containing, carbon-containing fuel and gaseous combustion product of sulfur-containing, carbon-containing fuel, comprising
- providing a calcium sulfide-containing mixture derived from said source by reacting sulfur-containing material in said source with a calcium-containing material so as to produce said calcium sulfide-containing mixture further containing impurities;
- leaching a majority of said calcium sulfide from said calcium sulfide-containing mixture in a first aqueous solution containing hydrogen sulfide in an amount sufficient to dissolve said majority of said calcium sulfide in said first aqueous solution, so as to form a second solution containing calcium hydrosulfide,
wherein said first and second solutions are maintained under a substantially oxygen-free atmosphere comprising hydrogen sulfide gas;
- separating the second solution containing said calcium hydrosulfide from said impurities; and
- precipitating from the second solution a calcium-containing material selected from the group consisting of calcium carbonate and calcium hydroxide.

2. The method of claim 1, wherein said calcium sulfide-containing mixture is provided by reacting sulfur-containing material present in said source with a calcium-containing absorbent so as to form said calcium sulfide-containing mixture including said calcium sulfide and said impurities.

3. The method of claim 2, wherein said sulfur-containing material is sulfur dioxide, said source is said gaseous combustion product, and the reacting step is comprised of the following steps, wherein:
- said sulfur dioxide is absorbed from said gaseous combustion product in a calcium-containing absorbent so as to form a first mixture; and
- the first mixture is heated in the presence of a reducing agent so as to convert the first mixture into said calcium sulfide-containing mixture including said calcium sulfide and said impurities.

4. The method of claim 3 wherein said gaseous combustion product is from burning of sulfur-bearing fuel.

5. The method of claim 4 wherein said fuel is coal.

6. The method of claim 3 wherein said calcium-containing absorbent is selected from the group consisting of lime and limestone.

7. The method of claim 6 wherein said sulfur dioxide is absorbed in said calcium-containing absorbent by wet scrubbing with said absorbent, dry injection with said absorbent or slurry injection spray drying with said absorbent.

8. The method of claim 3 wherein said reducing agent is coal.

9. The method of claim 1 wherein said hydrogen sulfide is present in said first aqueous solution in excess of said amount sufficient to dissolve said majority of said calcium sulfide.

10. The method of claim 1 wherein calcium carbonate is precipitated from the second solution by carbonation with a gas containing carbon dioxide.

11. The method of claim 10 wherein said gas containing carbon dioxide is derived from said gaseous combustion product, and is substantially oxygen-free.

12. The method of claim 1, further including the steps of:
- removing hydrogen sulfide from said second solution; and
- converting the hydrogen sulfide removed from the second solution under oxidizing conditions, so as to form elemental sulfur.

13. The method of claim 12 wherein the converting step is conducted in the presence of an oxidizing agent.

14. The method of claim 13 wherein said oxidizing agent is air.

15. The method of claim 1, further including the steps of:
- removing hydrogen sulfide gas from said second solution;
- passing the removed hydrogen sulfide gas through a further calcium hydrosulfide-containing aqueous solution containing further hydrogen sulfide, so as to substantially scrub out any residual carbon dioxide in said removed hydrogen sulfide gas thereby forming substantially purified hydrogen sulfide gas.

16. The method of claim 15, further including the steps of:
- recycling the substantially carbon dioxide-free hydrogen sulfide gas to dissolve calcium sulfide in an aqueous solution; and
- converting the substantially purified hydrogen sulfide gas under oxidation conditions, so as to form elemental sulfur.

17. The method of claim 1 wherein said sulfur-containing material comprises a metal-sulfur compound and said metal being selected from the group consisting of calcium and strontium.

18. The method of claim 17 wherein said reducing agent is coal.

19. The method of claim 17 wherein said hydrogen sulfide is present in said first aqueous solution in excess of said amount sufficient to dissolve said majority of said metal sulfide.

20. An apparatus for carrying out the method of claim 1, comprising:
- a leaching zone containing a calcium sulfide-containing mixture derived from a source selected from the group consisting of sulfur-containing, carbon-containing fuel and gaseous combustion product of sulfur-containing, carbon-containing fuel, within which leaching zone a majority of the calcium sulfide from said calcium sulfide-containing mixture is leached in a first aqueous solution containing hydrogen sulfide in an amount sufficient to dissolve said majority of said calcium sulfide in said first aqueous solution, so as to form a second solution containing calcium hydrosulfide, wherein said leaching zone includes means for providing a blanket of hydrogen sulfide gas so that said hydrogen sulfide blanket maintains said first and second solutions under a substantially oxygen-free atmosphere;
- a separation system connected to the leaching zone, through which the second solution containing said calcium hydrosulfide is separated from said impurities; and
- a precipitating zone operatively associated with the separating system, within which a calcium-containing material is precipitated from the second solution, said calcium-containing material being selected from the group consisting of calcium carbonate and calcium hydroxide.

21. The apparatus of claim 20, further comprising a heating zone for receiving a first mixture from an absorption zone, the absorption zone including a calcium-containing absorbent and receiving sulfur dioxide-containing gaseous combustion product, wherein sulfur dioxide from said gaseous combustion product is absorbed in the calcium-containing absorbent so as to form the first mixture, wherein, in the heating zone the first mixture is heated in the presence of a reducing agent so as to convert the first mixture into said calcium sulfide-containing mixture, said heating zone being connected to the leaching zone for introducing the calcium sulfide-containing mixture into the leaching zone.

22. The apparatus of claim 20, further including a system for removing hydrogen sulfide gas from said second solution.

23. The apparatus of claim 22, wherein said system for removing hydrogen sulfide gas from said second solution also converts the hydrogen sulfide gas removed from the second solution, under oxidizing conditions, so as to form elemental sulfur.

## Patentansprüche

1. Verfahren zur Verarbeitung von schwefelhaltigem Material, das aus einer Quelle stammt, ausgewählt aus der Gruppe, bestehend aus schwefel- und kohlenstoffhaltigem Brennstoff sowie einem gasförmigen Verbrennungsprodukt eines schwefel- und kohlenstoffhaltigen Brennstoffs, das folgendes umfaßt:
- Bereitstellung eines calciumsulfidhaltigem Gemisches, das aus der obigen Quelle stammt, durch Umsetzung des schwefelhaltigen Materials in der Quelle mit einem calciumhaltigen Material zur Erzeugung des calciumsulfidhaltigen Gemisches, das außerdem noch Verunreinigungen enthält,
- Auswaschen des Hauptanteils an Calciumsulfid aus dem calciumsulfidhaltigen Gemisch in einer ersten wäßrigen Lösung, die Schwefelwasserstoff in einer Menge enthält, die zur Lösung des Hauptanteils des Calciumsulfids in der ersten wäßrigen Lösung ausreicht, zur Bildung einer zweiten, Calciumhydrogensulfid enthaltenden Lösung, wobei die erste und die zweite Lösung unter im Wesentlichen sauerstofffreier, Schwefelwasserstoffgas enthaltender Atmosphäre gehalten werden,
- Abtrennung der zweiten, Calciumhydrogensulfid enthaltenden Lösung von den Verunreinigungen und
- Ausfällung eines Calcium enthaltenden Materials, ausgewählt aus der Gruppe, bestehend aus Calciumcarbonat und Calciumhydroxid, aus der zweiten Lösung.

2. Verfahren nach Anspruch 1, wobei das calciumsulfidhaltige Gemisch durch Umsetzung des schwefelhaltigen Materials in der Quelle mit einem calciumhaltigen Absorbens zur Erzeugung des calciumsulfidhaltigen Gemisches, das Calciumsulfid und Verunreinigungen umfaßt, bereitgestellt wird.

3. Verfahren nach Anspruch 2, wobei das schwefelhaltige Material Schwefeldioxid ist, die Quelle das gasförmige Verbrennungsprodukt ist und die Umsetzungsstufe die nachfolgenden Stufen umfaßt, wobei
- das Schwefeldioxid aus dem gasförmigen Verbrennungsprodukt in einem calciumhaltigen Absorbens unter Bildung eines ersten Gemisches absorbiert wird und
- das erste Gemisch in Anwesenheit eines Reduktionsmittels zur Umwandlung des ersten Gemisches in das calciumsulfidhaltige Gemisch, das Calciumsulfid und Verunreinigungen enthält, erwärmt wird.

4. Verfahren nach Anspruch 3, wobei das gasförmige Verbrennungsprodukt aus der Verbrennung von schwefelhaltigem Brennstoff stammt.

5. Verfahren nach Anspruch 4, wobei der Brennstoff Kohle ist.

6. Verfahren nach Anspruch 3, wobei das calciumhaltige Absorbens ausgewählt wird aus der Gruppe, bestehend aus Kalk und Kalkstein.

7. Verfahren nach Anspruch 6, wobei das Schwefeldioxid im calciumhaltigen Absorbens durch Naßwäsche mit dem Absorbens, Trockeneinspritzung mit dem Absorbens oder Suspensionseinspritzungssprühtrocknung mit dem Absorbens absorbiert wird.

8. Verfahren nach Anspruch 3, wobei das Reduktionsmittel Kohle ist.

9. Verfahren nach Anspruch 1, wobei der Schwefelwasserstoff in der ersten wäßrigen Lösung im zur Lösung des Hauptanteils des Calciumsulfids ausreichendem Überschuß vorliegt.

10. Verfahren nach Anspruch 1, wobei das Calciumcarbonat aus der zweiten Lösung durch Carbonisierung mit einem Kohlendioxid enthaltenden Gas ausgefällt wird.

11. Verfahren nach Anspruch 10, wobei das Kohlendioxid enthaltende Gas aus dem gasförmigen Verbrennungsprodukt stammt und im Wesentlichen sauerstofffrei ist.

12. Verfahren nach Anspruch 1, das außerdem noch folgende Stufen umfaßt:
- Entfernung des Schwefelwasserstoffs aus der zweiten Lösung und
- Umwandlung des aus der zweiten Lösung entfernten Schwefelwasserstoffs unter oxidierenden Bedingungen, wodurch elementarer Schwefel entsteht.

13. Verfahren nach Anspruch 12, wobei die Umwandlungsstufe in Anwesenheit eines Oxidationsmittels durchgeführt wird.

14. Verfahren nach Anspruch 13, wobei das Oxidationsmittel Luft ist.

15. Verfahren nach Anspruch 1, das außerdem noch folgende Stufen umfaßt:
- Entfernung des Schwefelwasserstoffgases aus der zweiten Lösung,
- Hindurchleiten des entfernten Schwefelwasserstoffgases durch eine weitere Calciumhydrogensulfid enthaltende wäßrige Lösung, die außerdem noch Schwefelwasserstoff enthält, um das restliche Kohlendioxid im entfernten Schwefelwasserstoffgas praktisch vollständig auszuwaschen, wodurch praktisch gereinigtes Schwefelwasserstoffgas entsteht.

16. Verfahren nach Anspruch 15, das außerdem noch folgende Stufen umfaßt:
- Rückführung des praktisch kohlendioxidfreien Schwefelwasserstoffgases zur Lösung des Calciumsulfids in einer wäßrigen Lösung und
- Umwandlung des praktisch gereinigten Schwefelwasserstoffgases unter Oxidationsbedingungen, wodurch elementarer Schwefel entsteht.

17. Verfahren nach Anspruch 1, wobei das schwefelhaltige Material eine Metallschwefelverbindung umfaßt und das Metall ausgewählt wird aus der Gruppe, bestehend aus Calcium und Strontium.

18. Verfahren nach Anspruch 17, bei dem der Brennstoff Kohle ist.

19. Verfahren nach Anspruch 17, wobei der Schwefelwasserstoff in der ersten wäßrigen Lösung im zur Lösung des Hauptanteils an Metallsulfid ausreichenden Überschuß vorliegt.

20. Vorrichtung zur Durchführung des Verfahrens nach Anspruch 1, umfassend:
- eine Auswaschzone, enthaltend ein Calciumsulfid enthaltendes Gemisch, das aus einer Quelle stammt, ausgewählt aus der Gruppe, bestehend aus einem schwefel- und kohlenstoffhaltigen Brennstoff und einem gasförmigen Verbrennungsprodukt des schwefel- und kohlenstoffhaltigen Brennstoffs, wobei in der Auswaschzone ein Hauptanteil an Calciumsulfid aus dem Calciumsulfid enthaltendem Gemisch in einer ersten wäßrigen, Schwefelwasserstoff enthaltenden Lösung in einer für die Lösung des Hauptanteils an Calciumsulfid in der ersten wäßrigen Lösung ausreichenden Menge ausgewaschen wird, wodurch eine zweite, Calciumhydrogensulfid enthaltende Lösung gebildet wird, wobei die Auswaschzone Mittel zur Bereitstellung einer Schutzschicht aus Schwefelwasserstoffgas umfaßt, so daß die Schutzschicht aus Schwefelwasserstoffgas die erste und die zweite Lösung unter praktisch sauerstofffreier Atmosphäre hält,
- ein mit der Auswaschzone verbundenes Abtrennungssystem, durch das die zweite, das Calciumhydrogensulfid enthaltende Lösung von den Verunreinigungen abgetrennt wird, und
- eine Ausfällungszone, die operativ mit dem Abtrennungssystem verbunden ist, in der ein calciumhaltiges Material aus der zweiten Lösung ausgefällt wird, wobei das calciumhaltige Material ausgewählt wird aus der Gruppe, bestehend aus Calciumcarbonat und Calciumhydroxid.

21. Vorrichtung nach Anspruch 20, das außerdem noch eine Erwärmungszone für die Aufnahme eines ersten Gemisches aus einer Absorptionszone umfaßt, wobei diese ein calciumhaltiges Absorbens umfaßt und das Schwefeldioxid enthaltende gasförmige Verbrennungsprodukt aufnimmt, wobei das Schwefeldioxid aus dem gasförmigen Verbrennungsprodukt im calciumhaltigen Absorbens unter Bildung des ersten Gemisches absorbiert wird, wobei in der Erwärmungszone das erste Gemisch in Anwesenheit eines Reduktionsmittels zur Umwandlung des ersten Gemisches in das calciumsulfidhaltige Gemisch erwärmt wird und die Erwärmungszone mit der Auswaschzone für die Zufuhr des Calciumsulfid enthaltenden Gemisches zur Auswaschzone verbunden ist.

22. Vorrichtung nach Anspruch 20, das außerdem noch ein System zur Entfernung von Schwefelwasserstoffgas aus der zweiten Lösung umfaßt.

23. Vorrichtung nach Anspruch 22, wobei das System zur Entfernung des Schwefelwasserstoffgases aus der zweiten Lösung außerdem noch das aus der zweiten Lösung entfernte Schwefelwasserstoffgas unter oxidierenden Bedingungen zu elementarem Schwefel umwandelt.

## Revendications

1. Procédé pour traiter une matière soufrée qui dérive d'une source choisie parmi le groupe constitué par du combustible carboné, soufré et des produits de combustion gazeux d'un combustible carboné, soufré, comprenant :
- le fait de procurer un mélange contenant du sulfure de calcium dérivé de ladite source en faisant réagir une matière soufrée dans ladite source avec une matière contenant du calcium de façon à obtenir ledit mélange contenant du sulfure de calcium et qui contient en outre des impuretés ;
- la lixiviation d'une majeure partie dudit sulfure de calcium par rapport audit mélange contenant du sulfure de calcium dans une première solution aqueuse contenant du sulfure d'hydrogène en une quantité suffisante pour dissoudre ladite majeure partie dudit sulfure de calcium dans ladite première solution aqueuse, de façon à obtenir une deuxième solution contenant du sulfhydrate de calcium, ladite première et ladite deuxième solution étant maintenue dans une atmosphère essentiellement exempte d'oxygène, comprenant du sulfure d'hydrogène gazeux ;
- la séparation de la deuxième solution contenant ledit sulfhydrate de calcium, par rapport auxdites impuretés ; et
- la précipitation, à partir de la deuxième solution, d'une matière contenant du calcium choisie parmi le groupe constitué par le carbonate de calcium et l'hydroxyde de calcium.

2. Procédé selon la revendication 1, dans lequel on procure ledit mélange contenant du sulfure de calcium en faisant réagir une matière soufrée présente dans ladite source avec un absorbant contenant du calcium de façon à obtenir ledit mélange contenant du sulfure de calcium englobant ledit sulfure de calcium et lesdites impuretés.

3. Procédé selon la revendication 2, dans lequel ladite matière soufrée est du dioxyde de soufre, ladite source représente ledit produit de combustion gazeux, et l'étape réactionnelle comprend les étapes suivantes dans lesquelles :
- ledit dioxyde de soufre est absorbé à partir dudit produit de combustion gazeux dans un absorbant contenant du calcium de façon à obtenir un premier mélange ; et
- le premier mélange est chauffé en présence d'un agent de réduction de façon à transformer le premier mélange pour obtenir ledit mélange contenant du sulfure de calcium englobant ledit sulfure de calcium et lesdites impuretés.

4. Procédé selon la revendication 3, dans lequel ledit produit de combustion gazeux provient de la combustion de combustible soufré.

5. Procédé selon la revendication 4, dans lequel ledit combustible est du charbon.

6. Procédé selon la revendication 3, dans lequel ledit absorbant contenant du calcium est choisi parmi le groupe constitué par de la chaux et du carbonate de calcium.

7. Procédé selon la revendication 6, dans lequel ledit dioxyde de soufre est absorbé dans ledit absorbant contenant de calcium par lavage par voie humide avec ledit absorbant, par injection par voie sèche avec ledit absorbant ou par injection de bouillie/séchage par pulvérisation avec ledit absorbant.

8. Procédé selon la revendication 3, dans lequel ledit agent de réduction est du charbon.

9. Procédé selon la revendication 1, dans lequel ledit sulfure d'hydrogène est présent dans ladite première solution aqueuse en excès par rapport à ladite quantité suffisante pour dissoudre ladite majeure partie dudit sulfure de calcium.

10. Procédé selon la revendication 1, dans lequel on précipite du carbonate de calcium à partir de la deuxième solution par carbonatation avec un gaz contenant du dioxyde de carbone.

11. Procédé selon la revendication 10, dans lequel ledit gaz contenant du dioxyde de carbone dérive dudit produit de combustion gazeux et est essentiellement exempt d'oxygène.

12. Procédé selon la revendication 1, englobant en outre les étapes :
- d'élimination du sulfure d'hydrogène de ladite deuxième solution ; et
- de transformation du sulfure d'hydrogène éliminé de la deuxième solution, dans des conditions d'oxydation, de façon à obtenir du soufre élémentaire.

13. Procédé selon la revendication 12, dans lequel l'étape de transformation est mise en oeuvre en présence d'un agent d'oxydation.

14. Procédé selon la revendication 13, dans lequel ledit agent d'oxydation est l'air.

15. Procédé selon la revendication 1, englobant en outre les étapes :
- d'élimination du sulfure d'hydrogène gazeux de ladite deuxième solution ;
- de passage du sulfure d'hydrogène gazeux éliminé à travers une solution aqueuse supplémentaire qui contient du sulfhydrate de calcium, contenant en outre du sulfure d'hydrogène, de façon à éliminer essentiellement par lavage toute quantité résiduelle de dioxyde de carbone dans ledit sulfure d'hydrogène gazeux éliminé, pour ainsi obtenir du sulfure d'hydrogène gazeux essentiellement purifié.

16. Procédé selon la revendication 15, englobant en outre les étapes :
- de recyclage du sulfure d'hydrogène gazeux essentiellement exempt de dioxyde de carbone afin de dissoudre le sulfure de calcium dans une solution aqueuse ; et
- de transformation du sulfure d'hydrogène gazeux essentiellement purifié, dans des conditions d'oxydation, pour obtenir du soufre élémentaire.

17. Procédé selon la revendication 1, dans lequel ladite matière soufrée comprend un composé de soufre métallique et ledit métal est choisi parmi le groupe constitué par le calcium et le strontium.

18. Procédé selon la revendication 17, dans lequel ledit agent de réduction est du charbon.

19. Procédé selon la revendication 17, dans lequel ledit sulfure d'hydrogène est présent dans ladite première solution aqueuse par rapport à ladite quantité suffisante pour dissoudre ladite majeure partie dudit sulfure métallique.

20. Appareil pour la mise en oeuvre du procédé selon la revendication 1, comprenant :
- une zone de lixiviation qui contient un mélange contenant du sulfure de calcium, qui dérive d'une source choisie parmi le groupe constitué par du combustible carboné, soufré et des produits de combustion gazeux d'un combustible carboné, soufré, dans la zone de lixiviation dans laquelle une majeure partie du sulfure de calcium est séparée par lixiviation dudit mélange contenant du sulfure de calcium, dans une première solution aqueuse contenant du sulfure d'hydrogène, en une quantité suffisante pour dissoudre ladite majeure partie dudit sulfure de calcium dans ladite première solution aqueuse, de façon à obtenir une deuxième solution contenant du sulfhydrate de calcium, ladite zone de lixiviation englobant des moyens pour procurer une couverture de sulfure d'hydrogène gazeux de telle sorte que ladite couverture de sulfure d'hydrogène maintient ladite première et ladite deuxième solution sous une atmosphère essentiellement exempte d'oxygène ;
- un système de séparation relié à la zone de lixiviation, par lequel la deuxième solution contenant ledit sulfhydrate de calcium est séparée desdites impuretés ; et
- une zone de précipitation associée de manière opérante au système de séparation, dans laquelle une matière contenant du calcium est précipitée à partir de la deuxième solution, ladite matière contenant du calcium étant choisie parmi le groupe constitué par le carbonate de calcium et l'hydroxyde de calcium.

21. Appareil selon la revendication 20, comprenant en outre une zone de chauffage pour recevoir un premier mélange provenant d'une zone d'absorption, la zone d'absorption englobant un absorbant contenant du calcium et recevant un produit de combustion gazeux contenant du dioxyde de soufre, le dioxyde de soufre provenant dudit produit de combustion gazeux étant absorbé dans l'absorbant contenant du calcium de façon à obtenir le premier mélange, dans lequel, dans la zone de chauffage, le premier mélange est chauffé en présence d'un agent de réduction de façon à transformer le premier mélange pour obtenir ledit mélange contenant du sulfure de calcium, ladite zone de chauffage étant raccordée à la zone de lixiviation pour introduire le mélange contenant du sulfure de calcium, dans la zone de lixiviation.

22. Appareil selon la revendication 20, englobant en outre un système pour éliminer de ladite deuxième solution, du sulfure d'hydrogène gazeux.

23. Appareil selon la revendication 22, dans lequel ledit système pour éliminer le sulfure d'hydrogène gazeux de ladite deuxième solution, transforme également le sulfure d'hydrogène gazeux éliminé de la deuxième solution, dans des conditions oxydantes, de façon à obtenir du soufre élémentaire.
